# EUROPÄISCHE PATENTSCHRIFT

(11) **EP 1 326 019 B1**
(45) Veröffentlichungstag und Bekanntmachung des Hinweises auf die Patenterteilung: **04.07.2007**
(21) Anmeldenummer: 02027601.0
(22) Anmeldetag: 10.12.2002
(51) Int. Cl.: F02M 31/16, F02M 37/00

(54) **Kraftstoffleitsystem**
Fuel supply system
Dispositif d'alimentation en carburant

(30) Priorität: 10.12.2001 DE 10160562
(43) Veröffentlichungstag der Anmeldung: 09.07.2003
(73) Patentinhaber: Gruber, Georg, 90584 Allersberg (DE); Dotzer, Alois, 90584 Allersberg (DE); Kaiser, Thomas, D-80798 München (DE)
(72) Erfinder: Gruber, Georg, 90584 Allersberg (DE); Dotzer, Alois, 90584 Allersberg (DE); Kaiser, Thomas, D-80798 München (DE)

(56) Entgegenhaltungen:
- EP-A- 0 304 742
- EP-A- 0 935 066
- DE-A- 3 532 845
- DE-A- 3 805 692
- DE-A- 19 631 981
- DE-A- 19 736 283
- DE-C- 19 740 057
- US-A- 4 228 776

## Beschreibung

Die Erfindung geht aus von einem Kraftstoffleitsystem für die Versorgung von Brennkraftmaschinen nach dem Oberbegriff von Anspruch 1.

In der DE 197 36 283 A1 ist ein Kraftstoffleitsystem offenbart, welches einen Kraftstoffvorwärmer vorsieht. Dieser Kraftstoffvorwärmer ist dann wichtig, wenn Kraftstoffe verwendet werden, deren Viskosität sich bei Temperaturänderungen um den Nullpunkt herum stark verändert und der aus dem Tank geförderte Kraftstoff bei Außentemperaturen unter 0°C sehr zäh ist. Zum Füllen der Einspritzpumpe ist in diesem Falle eine erhebliche Vorleistung der Kraftstoffförderpumpe notwendig. Durch die Vorwärmung des Kraftstoffes in dem Kraftstoffvorwärmer wird die Viskosität angehoben und die Einspritzpumpe kann schneller, sicherer und mit weniger Energieaufwand gefüllt werden.

Es hat sich jedoch herausgestellt, dass bei hohen Außentemperaturen eine Vorwärmung des Kraftstoffes nachteilig sein kann. Bei neuen Hochdruckeinspritzsystemen wird der Kraftstoff auch zur Kühlung der Hochdruckeinspritzpumpen genutzt. Das bedeutet aber, dass der Kraftstoff, der diesen Einspritzpumpen zugeführt wird, eine bestimmte Höchsttemperatur nicht überschreiten sollte.

Oftmals wird der zur Kühlung der Hochdruckeinspritzpumpen verwendete Kraftstoff in modernen Kraftstoffleitsystemen vor seiner Rückführung in den Tank durch einen Kraftstoffkühler geführt. Hiermit soll verhindert werden, dass insbesondere bei fast verbrauchtem Tankinhalt der Kraftstoff in die dampfförmige Phase übergeht und somit aus dem Tank entweicht oder zu Störungen im Kraftstoffkreislauf und beim Betrieb der Brennkraftmaschine führt. Auch hier kann es aber geraten erscheinen, bei Außentemperaturen unter 0°C, den Tankinhalt während der Betriebszeit der Brennkraftmaschine bis zu einer bestimmten Temperatur aufzuwärmen, um nach einer längeren Ruhepause beim Wiederinbetriebsetzen der Brennkraftmaschine günstige Startbedingungen und einen nicht zu stark abgekühlten Kraftstoff im Tank vorzufinden.

Die DE-A-196.31.981 zeigt einen Kraftstoffversorgungskreislauf für ein Dieselaggregat. In diesem Kraftstoffsystem dient der Dieselkraftstoff auch der Kühlung der Hochdruckeinspritzpumpe. Im Winter wird der heiße Kraftstoff durch einen Wärmetauscher geführt, der dem Kraftstoff die Wärme entzieht und sie dem Heizsystem des Kraftfahrzeugs zuführt. Im Sommer oder wenn keine Wärme für die Heizung erforderlich ist, wird der heiße Kraftsstoff durch einen weiteren Wärmetauscher geführt, über den die Wärme an die Umgebungsluft abgegeben wird. Sowohl der erste als auch der weitere Wärmetauscher sind Temperiervorrichtungen, die dem Kraftstoff Wärme entziehen. Es ist jedoch keine Möglichkeit vorgesehen, den Kraftstoff so zu führen, dass ihm keine Wärme entzogen wird.

Auch in der EP-A-0.304.742 sind lediglich zwei Kühlvorrichtungen gezeigt, durch die der Kraftstoff alternativ geleitet werden kann.

Die DE-A-35.32.845 offenbart ein Kraftstoffleitsystem, bei dem ein Wärmetauscher und eine Bypassleitung zur Umgehung des Wärmetauschers vorgesehen ist. Der Kraftstoff, der der Einspritzpumpe zugeführt wird, fließt grundsätzlich durch den Wärmetauscher. Durch die Bypassleitung wird der Kraftstoff geleitet, der bei niedrigen Außentemperaturen nicht zur Kühlung der Einspritzpumpe benötigt wird.

Es war daher die Aufgabe der Erfindung, ein Kraftstoffleitsystem so auszubilden, dass die Temperatur des Kraftstoffes immer den vorherrschenden Außentemperaturen und den Betriebsbedingungen der Brennkraftmaschine angepasst werden kann.

Gelöst wird die Aufgabe durch ein Kraftstoffleitsystem, mit den kennzeichnenden Merkmalen von Anspruch 1. Durch die Bypassleitung, mit der immer eine entsprechende Menge Kraftstoff an der Temperiervorrichtung vorbeigeleitet werden kann, ist eine Temperaturregelung des Kraftstoffes sowohl bei einem Kraftstoffvorwärmer als auch bei einem Kraftstoffkühler gewährleistet.

Erfindungsgemäß wird die Aufteilung zwischen Temperiereinrichtung und Bypassleitung über die Kombination von einem Überdruckventil und einer Drossel vorgenommen. Mit dieser Kombination von Bauteilen wird folglich die Viskosität des Kraftstoffes nicht über den Umweg einer Temperaturregelung sondern direkt gesteuert.

Bei der Verwendung eines Kraftstoffvorwärmers, der zwischen Tank und Einspritzpumpe vorgesehen ist, ist - nach der Verzweigung des Kraftstoffes in Richtung Kraftstoffvorwärmer und Bypassleitung - das Überdruckventil in dem Zweig durch den Kraftstoffvorwärmer und die Drossel in der Bypassleitung angeordnet.

Ist die Temperiervorrichtung hingegen als Kraftstoffkühler in der Rücklaufleitung zwischen Hochdruckeinspritzpumpe und Tank ausgebildet, ist eine umgekehrte Anordnung der Bauteile wie bei dem Kraftstoffvorwärmer vorgesehen. Nach der Verzweigung des Kraftstoffes in den Kraftstoffkühler und in die Bypassleitung ist das Überdruckventil der Bypassleitung und die Drossel der Leitung durch den Kraftstoffkühler zugeordnet.

Bei beiden Varianten ist das Überdruckventil jeweils so auf die Drossel abgestimmt, dass es nur bei hoher Viskosität des Kraftstoffes öffnet. Das heißt aber, dass Kraftstoff mit hoher Viskosität durch die Leitung mit der Drossel abgeführt wird. Dies bedeutet jedoch keine Entweder-Oder-Regelung, sondern steuert die Verzweigung des Kraftstoffes in den Bypass und die Temperiereinrichtung kontinuierlich und passt sich allen Kraftstoffviskositäten entsprechend an.

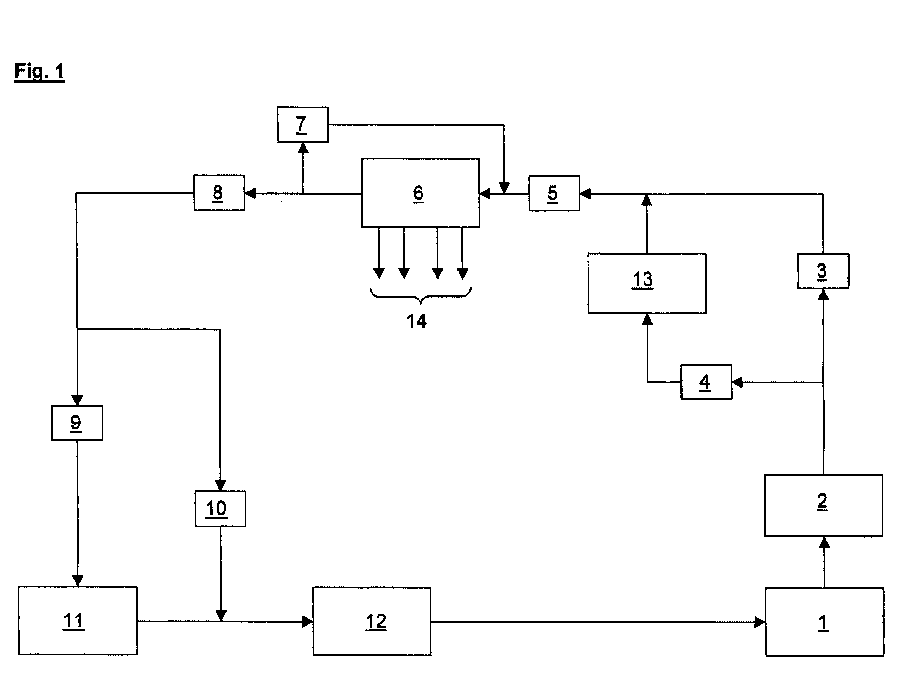

Weiter Vorteile der Erfindung gehen aus den Unteransprüchen hervor und werden anhand eines Ausführungsbeispiels in Verbindung mit der Zeichnung eingehend erläutert.

Die einzige Figur zeigt ein Blockdiagramm eines erfindungsgemäßen Kraftstoffleitsystems. Der Kraftstofftank 1 steht über eine Kraftstoffleitung mit der Kraftstoffförderpumpe 2 in Verbindung. Diese fördert den angesaugten Kraftstoff in Richtung des Kraftstoffvorwärmers 13. Vor dem Kraftstoffvorwärmer teilt sich die Kraftstoffleitung in einen Bypass mit einer Drossel 3 und eine Leitung zu dem Vorwärmer mit einem vorgelagerten Überdruckventil 4 auf.

Nach dem Kraftstoffvorwärmer 13 bzw. der Drossel 3 werden beide Kraftstoffleitungen wieder zusammengeführt und münden in den Kraftstofffeinstfilter 5. Von dort wird der Kraftstoff der Einspritzpumpe 6 zugeführt und in die einzelnen Zylinder 14 eingespritzt.

Das Einspritzverfahren(Common Rail, Pumpe-Düse, usw.) und die Art der Einspritzpumpe (Reihenpumpe, Verteilerpumpe, Radialkolbenverdichterpumpe, usw.) spielen hierbei keine Rolle.

Die Leitung für den überschüssigen Kraftstoff, der die Einspritzpumpe passiert hat, wird in eine Leitung mit einem Überdruckventil 7 und eine Leitung mit einer Drossel 8 aufgeteilt. Über das Überdruckventil 7 wird der Kraftstoff zwischen dem Feinstfilter 5 und der Einspritzpumpe 6 dem frischen Kraftstoff zugemischt.

Über die Drossel 8 gelangt der restliche Kraftstoff an eine weitere Verteilstelle zu einem weiteren Überdruckventil 10 und einer weiteren Drossel 9 in der Leitung zu einem Kraftstoffkühler 11. Nach dem Kraftstoffkühler 11 vereinigen sich beide Kraftstoffleitungen wieder.

Die Kraftstoffrückführpumpe 12 übernimmt die Förderung des Kraftstoffes zwischen Einspritzpumpe 6 und Tank 1.

Wird nun die nicht gezeigte Brennkraftmaschine bei niedriger Außentemperatur gestartet, ist der Kraftstoff zäh und lässt sich von der Kraftstoffförderpumpe 2 kaum durch die Drossel 3 drücken. Aufgrund des anstehenden Überdrucks öffnet das Überdruckventil 4 und gibt den Weg zu dem Kraftstoffvorwärmer 13 frei.

Bei höheren Außentemperaturen oder nach längerer Betriebszeit weist der Kraftstoff eine höhere Viskosität auf und die Drossel 3 bietet kein Hindernis mehr für ihn. Entsprechend der Kraftstoffviskosität wird sich dann das Überdruckventil ganz schließen, so dass der gesamte Kraftstoffstrom durch die Drossel 3 fließt. Bei mittleren Temperaturen findet eine Aufteilung des Kraftstoffes zwischen beiden möglichen Wegen statt.

Durch die Einspritzpumpe 6 wird immer mehr Kraftstoff gefördert, als zur Einspritzung in die Zylinder benötigt wird. Der Kraftstoff, der die Pumpe bereits passiert hat ist durch die Druckerhöhung aufgeheizt. Nach dem Startvorgang wird dieser bereits vorgewärmte Kraftstoff für die Einspritzung benötigt. Die Drossel 8 verhindert daher einen Rückfluss in den Tank bis eine höhere Temperatur erreicht ist. Erst dann kann der Kraftstoff mit hoher Viskosität die Drossel 8 passieren, da die Rückführung von sehr heißem Kraftstoff zur Einspritzpumpe zur Verdampfung und damit zu Störungen bei der Einspritzung führen würde. Bei zäherem (kälterem) Kraftstoff öffnet das Überdruckventil 7 und führt den Kraftstoff wieder der Einspritzpumpe 6 zu.

Der heiße, dünnflüssige Kraftstoff der die Drossel 8 passiert hat, kann nun entweder direkt in den Tank 1 rückgeführt werden oder muss, wenn er schon zu heiß ist, weil auch der Tank bereits aufgeheizt wurde, einem Kraftstoffkühler 11 zugeführt werden. Die Aufteilung wird wiederum durch ein Überdruckventil 10 und eine Drossel 9 vorgenommen.

Noch nicht zu heißer Kraftstoff wird von der Drossel 9 zurückgehalten und fließt direkt über das Überdruckventil 10 ab. Wird die Kraftstofftemperatur weiter erhöht, lässt die Drossel 9 immer mehr Kraftstoff zu dem Kraftstoffkühler 11 durch.

## Patentansprüche

1. Kraftstoffleitsystem für die Versorgung von Brennkraftmaschinen mit flüssigem Kraftstoff, wobei wenigstens eine Temperiervorrichtung (11, 13) für den Kraftstoff vorgesehen ist, **dadurch gekennzeichnet, dass** zur Regelung der Temperatur des Kraftstoffes eine Bypassleitung zur Umgehung der Temperiervorrichtung (11,13), eine Einrichtung (3, 4 und 9, 10) zur Aufteilung des Kraftstoffes in die Temperiervorrichtung (11, 13) und die Bypassleitung und eine Einrichtung zur Zusammenführung des Kraftstoffes aus der Temperiervorrichtung (11, 13) und der Bypassleitung vorgesehen ist, wobei die Bypassleitung selbst keine Temperiervorrichtung aufweist.

2. Kraftstoffleitsystem nach Anspruch 1, **dadurch gekennzeichnet, dass** die Einrichtung zur Aufteilung des Kraftstoffes ein Überdruckventil (4, 10) und eine Drossel (3, 9) aufweist.

3. Kraftstoffleitsystem nach Anspruch 2, **dadurch gekennzeichnet, dass** die Temperiervorrichtung ein Kraftstoffvorwärmer (13) ist.

4. Kraftstoffleitsystem nach Anspruch 3, **dadurch gekennzeichnet, dass** das Überdruckventil (4) in der Leitung durch den Kraftstoffvorwärmer (13) und die Drossel (3) in der Bypassleitung vorgesehen ist.

5. Kraftstoffleitsystem nach Anspruch 2, **dadurch gekennzeichnet, dass** die Temperiervorrichtung ein Kraftstoffkühler (11) ist.

6. Kraftstoffleitsystem nach Anspruch 5, **dadurch gekennzeichnet, dass** die Drossel (9) in der Leitung durch den Kraftstoffkühler (11) und das Überdruckventil (10) in der Bypassleitung vorgesehen ist.

7. Kraftstoffleitsystem nach Anspruch 2, **dadurch gekennzeichnet, dass** Drossel (3, 9) und Überdruckventil (4, 10) so aufeinander abgestimmt sind, dass Kraftstoff geringer Viskosität die Drossel (3, 9) durchströmt, während das Überdruckventil (4, 10) geschlossen bleibt.

8. Kraftstoffleitsystem nach Anspruch 2, **dadurch gekennzeichnet, dass** Drossel (3, 9) und Überdruckventil (4, 10) so aufeinander abgestimmt sind, dass die Drossel (3, 9) für Kraftstoff hoher Viskosität eine schwer durchgängige Barriere bildet, während das Überdruckventil (4, 10) entsprechend aufgedrückt wird.

9. Kraftstoffleitsystem nach Anspruch 1 oder Anspruch 2, **dadurch gekennzeichnet, dass** vor der Temperiervorrichtung (13) eine Pumpe (2) vorgesehen ist, die den Kraftstoff durch die Temperiervorrichtung (13) bzw. die Bypassleitung drückt.

10. Kraftstoffleitsystem nach Anspruch 1 oder Anspruch 2, **dadurch gekennzeichnet, dass** hinter der Temperiervorrichtung (11) eine Pumpe (12) vorgesehen ist, die den Kraftstoff durch die Temperiervorrichtung (11), bzw. die Bypassleitung saugt.

## Claims

1. A fuel piping system for the supply of internal combusting engines with liquid fuel including at least one temperature control device (11, 13) to control the temperature of the fuel wherein the temperature control is provided by a bypassing pipe to bypass the temperature control device (11, 13), a device (3, 4 and 9, 10) to divide the fuel flow into the temperature control device (11, 13) and into the bypassing pipe as well as a device to merge the fuel flow from the temperature control device (11, 13) and the bypassing pipe, wherein the bypassing pipe does not comprise a temperature control device.

2. A fuel piping system according to claim 1, wherein the device to divide the fuel flow comprises a relief pressure valve (4, 10) and a choke (3, 9).

3. A fuel piping system according to claim 2, wherein the temperature control device is a fuel-preheating device (13).

4. A fuel piping system according to claim 3, wherein the relief pressure valve (4) is part of the piping through the fuel preheating device (13) and the choke (3) is part of the bypassing pipe.

5. A fuel piping system according to claim 3, wherein the temperature control device is a fuel-cooling device (11).

6. A fuel piping system according to claim 5, wherein the choke (9) is part of the piping through the fuel cooling device (11) and the relief pressure valve (10) is part of the bypassing pipe.

7. A fuel piping system according to claim 5, wherein the choke (3, 9) and the relief pressure valve (4, 10) are harmonized in a way so as fuel of low viscosity will flow through the choke (3, 9) while the relief pressure valve (4, 10) is closed.

8. A fuel piping system according to claim 5, wherein the choke (3, 9) and the relief pressure valve (4, 10) are harmonized in a way so as the choke (3, 9) will be a high flow restriction for fuel of high viscosity while the relief pressure valve (4, 10) will be opened accordingly.

9. A fuel piping system according to claim 1 or claim 2, wherein a pump (2) is provided upstream of the temperature control device (13), pressing the fuel through the temperature control device (13) or the bypassing pipe respectively.

10. A fuel piping system according to claim 1 or claim 2, wherein a pump (12) is provided downstream of the temperature control device (11), drawing the fuel through the temperature control device (13) or the bypassing pipe respectively.

## Revendications

1. Système de conduite de carburant pour l'alimentation de moteurs à combustion internes en carburant liquide constitué d'au moins un dispositif de régulation thermique (11, 13) pour le carburant, **caractérisé par le fait que** pour réguler la température du carburant il comporte une conduite de dérivation pour contourner le dispositif de régulation thermique (11, 13), un appareil (3, 4 et 9, 10) de division du carburant dans le dispositif de régulation thermique (11, 13) et la conduite de dérivation, et un appareil de réunion du carburant en sortie du dispositif de régulation thermique (11, 13) et de la conduite de dérivation, ladite conduite de dérivation ne comportant pas elle-même de dispositif de régulation thermique.

2. Système de conduite de carburant selon la revendication 1, **caractérisé par le fait que** l'appareil diviseur de carburant comporte une soupape de surpression (4, 10) et un restricteur (3, 9).

3. Système de conduite de carburant selon la revendication 2 **caractérisé par le fait que** le dispositif de régulation thermique est un préchauffeur de carburant (13).

4. Système de conduite de carburant selon la revendication 3 **caractérisé par le fait que** la soupape de surpression (4) est placée dans la conduite passant par le préchauffeur de carburant (13) et le restricteur (3) dans la conduite de dérivation.

5. Système de conduite de carburant selon la revendication 2 **caractérisé par le fait que** le dispositif de régulation thermique est un radiateur de carburant (11).

6. Système de conduite de carburant selon la revendication 5 **caractérisé par le fait que** le restricteur (9) est placé dans la conduite passant par le radiateur de carburant (11) et la soupape de surpression (10) dans la conduite de dérivation.

7. Système de conduite de carburant selon la revendication 2 **caractérisé par le fait que** le restricteur (3, 9) et la soupape de surpression (4, 10) sont adaptés l'un à l'autre de telle manière que le carburant de moindre viscosité s'écoule à travers le restricteur (3, 9) tandis que la soupape de surpression (4, 10) reste fermée.

8. Système de conduite de carburant selon la revendication 2 **caractérisé par le fait que** le restricteur (3, 9) et la soupape de surpression (4, 10) sont adaptés l'un à l'autre de telle manière que le restricteur (3, 9) fait office de barrage difficilement franchissable au carburant à haute viscosité tandis que la soupape de surpression (4, 10) est forcée à l'ouverture en conséquence.

9. Système de conduite de carburant selon la revendication 1 ou la revendication 2 **caractérisé par le fait qu'**une pompe (2) est placée avant le dispositif de régulation thermique (13) pour refouler le carburant par le dispositif de régulation thermique (13) ou la conduite de dérivation.

10. Système de conduite de carburant selon la revendication 1 ou la revendication 2 **caractérisé par le fait qu'**une pompe (12) est placée après le dispositif de régulation thermique (11) pour aspirer le carburant au travers du dispositif de régulation thermique (11) ou de la conduite de dérivation.
